# EUROPEAN PATENT SPECIFICATION

(11) **EP 4 194 260 B1**
(45) Date of publication and mention of the grant of the patent: **07.08.2024**
(21) Application number: 21306728.3
(22) Date of filing: 08.12.2021
(51) Int. Cl.: B60M 1/24, B60M 1/30

(54) **BUSBAR FOR HOLDING A CONTACT WIRE, RIGID OVERHEAD CATENARY SYSTEM AND RAILTRACK COMPRISING SUCH A BUSBAR**
SAMMELSCHIENE ZUM HALTEN EINES KONTAKTDRAHTS, STARRES OBERLEITUNGSSYSTEM UND BAHNGLEIS MIT SOLCH EINER SAMMELSCHIENE
BARRE OMNIBUS POUR MAINTENIR UN FIL DE CONTACT, SYSTÈME DE CATÉNAIRE AÉRIENNE RIGIDE ET SYSTÈME COMPRENANT UNE TELLE BARRE OMNIBUS

(43) Date of publication of application: 14.06.2023
(73) Proprietor: ALSTOM Holdings, 93400 Saint-Ouen-sur-Seine (FR)
(72) Inventor: GIUGLIANO, Dario, 23900 LECCO (IT); BINDA, Claudio, 23821 ABBADIA LARIANA (IT); TERZONI, Fabio, 23900 LECCO (IT)
(74) Representative: Lavoix

(56) References cited:
- CN-A- 106 314 206
- CN-A- 113 335 141
- CN-U- 207 737 145
- US-A1- 2015 224 896

## Description

The present invention relates to a busbar for holding a contact wire, to a rigid overhead catenary system and to a rail track comprising such a busbar.

Known electric railroad vehicles, such as tramways or metros, are commonly supplied with electric energy through a rigid overhead catenary system, also called ROCS in short. A ROCS comprises a contact wire, usually made out of copper or one of its alloys, that is rigidly held by a support profile, or busbar. Common busbars are made out of lightweight conductive metal, such as aluminum. To ensure a good geometric alignment of the contact wire relatively to the rail track, each busbar holds the contact wire continuously. Such busbar is usually arranged in a one-piece profile that extends along a longitudinal axis, with two holding arms, each comprising a clamping portion that ends with a tip configured to cooperate with a profile of the contact wire, so that the two clamping portions hold the contact wire. The holding arms can be elastically opened, with a dedicated tool, for insertion of the contact wire between the two clamping portions.

The two holding arms delimit an inner volume, where water is prone to accumulate through condensation. Condensing water might reach the junction area of the contact wire with the busbar, resulting in galvanic corrosion between the contact wire and the busbar, which might lead to an early failure of the ROCS.

US-2015/0224896-A1 describes a busbar, wherein the clamping portions comprises protective walls, that extend within the inner volume to prevent condensed water to flow, by gravity, toward the contact wire, while some draining bores are arranged through the clamping portions so that condensed water may flow out of the inner volume. Grease can be applied onto the contact wire between the protective walls. However such busbar is not entirely satisfying, as grease cannot be applied evenly onto the contact wire to ensure proper corrosion protection.

There is a need for an improved busbar, that is easier to use and offer better protection of the contact wire.

To this end, aspects of the invention pertains to a busbar for holding a contact wire, the busbar being arranged in a metal profile extending along a longitudinal axis and having a section comprising:
- a base, with a flat and elongated shape extending in a median plane and arranged along the longitudinal axis,
- two holding arms, each comprising:
   - a main portion that extends from the base, so that the two main portions are facing each other on either side of apart a longitudinal plane that is orthogonal to the median plane and parallel to the longitudinal axis,
   - a clamping portion, that comprises a first extremity, linked to the main portion, and a second extremity, opposite to the first extremity and forming a clamping tip configured to cooperate with a contact wire, the two clamping portions extending toward the longitudinal plane and being configured to clamp onto the contact wire,
wherein the two holding arms delimit an inner volume of the busbar, wherein each clamping portion also comprises a protective wall, which is arranged between its first extremity and the clamping tip, which extends within the inner volume and which is configured to prevent water condensing on the busbar within the inner volume to flow by gravity to the clamping tips. According to the invention:
- the two protective walls include an upper wall and a lower wall, the upper wall being closer to the base than the lower wall, and
- the upper wall and the lower wall overlap each other along a direction orthogonal to the median plane, and delimit a volume configured to be filled with a protective paste, such as grease, when the contact wire is held by the busbar.

Thanks to the invention, the conduit delimited by the upper wall and the lower wall can easily be filled with a protective paste, for example grease, before clamping the contact wire to the busbar. The viscosity of the grease is high enough to prevent the grease to flow by itself or, during application, to invade the inner volume of the busbar through a gap between the upper wall and the lower wall.

According to advantageous but optional aspects, such a busbar may incorporate one or more of the following features, considered alone or according to any technically allowable combination:
- the upper wall and the lower wall are separated by a gap, which is smaller than 5 mm, preferably smaller than 2 mm.
- The upper wall comprises a first outer face, oriented toward the inner volume, while the lower wall comprises a second outer face, oriented toward the inner volume, wherein the first outer face extend downwardly from the corresponding clamping portion, while the second outer face extends upwardly from the corresponding clamping portion.
- Draining holes are arranged through the clamping portion from which the lower wall extends, the draining holes being arranged between the lower wall and the first extremity of this clamping portion.
- A dripping edge is arranged on an external face of the clamping portion from which the lower wall extends, the dripping edge being arranged between the draining holes and the clamping tip and extending downwardly.
- No draining holes are arranged though the clamping portion from which the upper wall extends.

The invention also concerns rigid overhead catenary system, comprising a contact line held by a busbar, wherein the busbar is as mentioned here above.

Other aspects of the invention concerns a railtrack, comprising a track and a rigid overhead catenary system as mentioned here above.

The invention will be better understood, and other advantages thereof will appear more clearly, in light of the following description of one embodiment of a busbar, a rigid overhead catenary system and a railtrack according to the invention, this description being provided solely as a non-limiting example and done in reference to the appended drawings, in which:
- figure 1 is a schematic side-view of a railtrack according to the invention, comprising a rigid overhead catenary system with a busbar according to the invention, and
- figure 2 is a perspective and sectional view, along plane II, of the rigid overhead catenary system of figure 1.

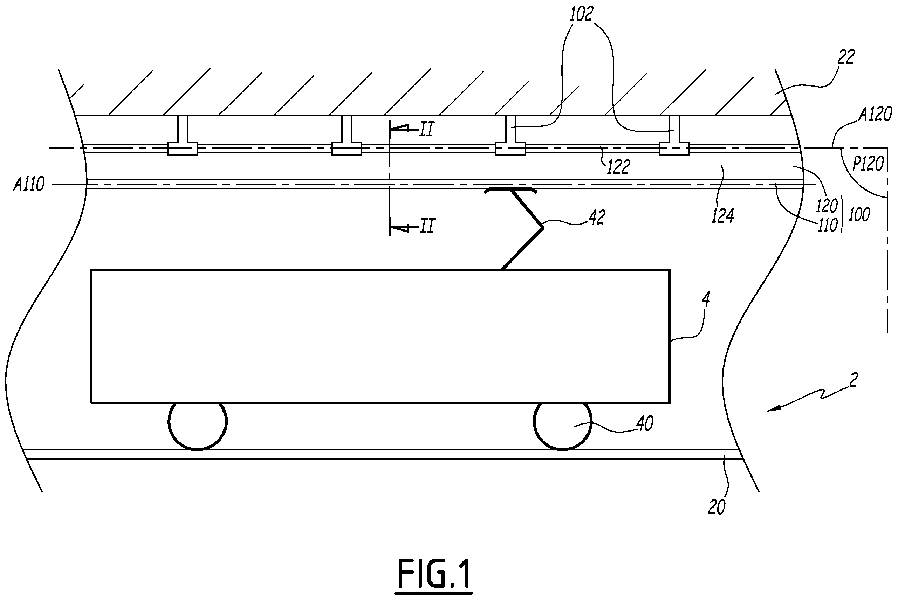

Figure 1 represents a railtrack 2. The railtrack 2 comprises two rails, which are parallel to each other. Only one rail 20 is visible on figure 1, and is supposed to be straight and horizontal.

The railtrack 2 is configured to have a vehicle 4 running on the rails 20. The vehicle 4 is a rail electric vehicle, such as a train, a metro, or a tramway, and comprises wheels 40 that are powered by an electric motor. The electric motor is not shown. Alternatively, the vehicle 3 runs on tires, and the rails 20 are replaced by guideways

The railtrack 2 comprises a rigid overhead catenary system 100, also called ROCS 100 within the present description, configured to supply the vehicle 4 with electric energy.

To this end, the vehicle 4 comprises an electricity collection device 42, such as a pantograph, which comes into contact with the ROCS 100 to collect electrical energy. In the illustrated example, the electricity returns to the railtrack 2 through the wheels 40.

The ROCS 100 is fixed relative to the rail 40, more precisely the ROCS is arranged above the rail 40 at a fixed height, so that the electricity collection device 42 works properly when the rail vehicle 4 is moving.

The ROCS 100 comprises a contact wire 110 and a busbar 120. The contact wire 110 is in contact with the electricity collection device 42 and is made from conductive metal, preferably from copper or a copper alloy, to ensure a low electric resistance. The wire 110 forms a contact line for the ROCS 100.

The contact wire 110 presents a cylindrical shape extending along a longitudinal axis A110, which is parallel to the rail 20. The contact wire 110 is held by the busbar 120, preferably continuously and rigidly held, so that the contact wire 110 does not flex when the current collection device 42 is pressing onto the contact wire 110.

The busbar 120 is arranged in a metal profile, which extends along a longitudinal axis A120, parallel to the longitudinal axis A110. The busbar 120 is preferably made from a lightweight and conductive metal, such as aluminum or an aluminum alloy. The busbar 120 is usually produced by extrusion.

In the example of the figures, the ROCS 100 further comprises clamps 102, which are fixed to a ceiling 22 of a tunnel section of the railtrack 2, above the rails 20. The busbar 120 is hanging downwards from the clamps 102. The contact wire 110, held by the busbar 120, is facing the ground. In a not shown alternative, the ROCS 100 is attached to a beam, which is linked to masts or poles that are arranged on the trackside and that extend above the rail 20.

Within the scope of this description, it is assumed that the longitudinal axis A120 is horizontal, and that the busbar 120 is hanging vertically. Of course in reality the actual orientation of the busbar 120 may vary, for example in slope sections or in curve sections of the railtrack 2.

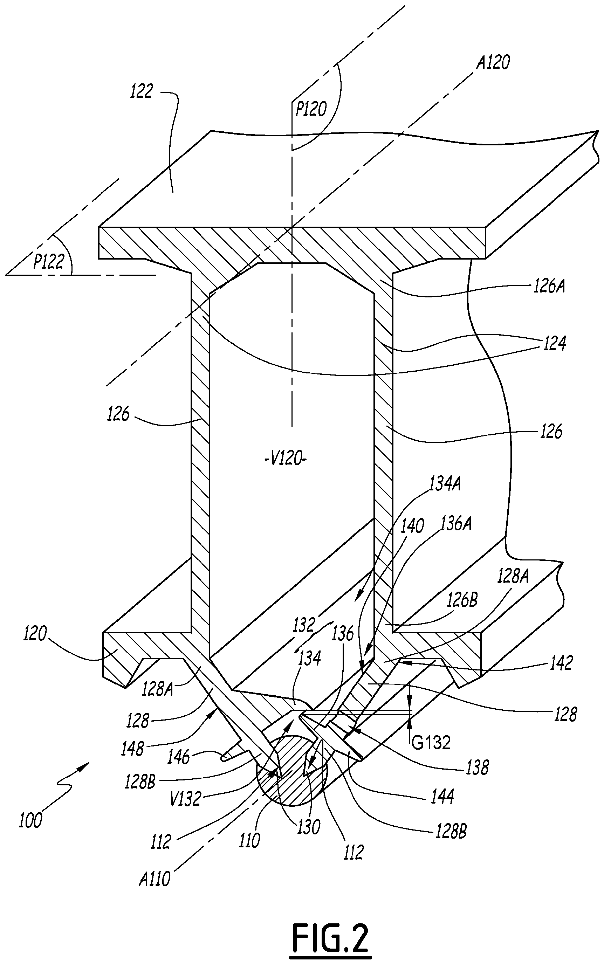

The contact wire 110 and the busbar 120 are now described with reference to figure 2.

The contact wire 110 presents a globally round profile, with two slits 112 configured to cooperate with clamping tips of the busbar 120, as described later.

The busbar 120 comprises a base 122, which is configured to cooperate with the clamps 102. The base 122 has a flat and elongated shape, that extends along a median plane P122 and that is arranged along the longitudinal axis A120. The median plane P122 is supposed to be horizontal.

The busbar 120 further comprises two holding arms 124. The holding arms 124 extend from the base 122 on the same side of the median plan P122, here on a downward side of the base 122. Each holding arm 124 comprises a main portion 126 and a clamping portion 128.

The two main portions 126 extend parallel from the base 122 and are arranged symmetrically, on either side of a longitudinal plane P120 of the busbar 120. The longitudinal plane P120 is orthogonal to the median plane P122 and parallel to the longitudinal axis A120. The two main portions 126 are facing each other on either side of the longitudinal plane P120.

Each main portion 126 comprises an upper end 126A, which is connected to the base 122, and a lower end 126B, which is opposite to the upper end 126A and which is connected to a respective clamping portion 128.

Each clamping portion 128 comprises a first extremity 128A, which is connected to a respective lower end 126B of the main portion 126, and a second extremity 128B, which is opposite to the first extremity 128A and which forms a clamping tip 130, configured to cooperate with a slit 112 of the contact wire 110.

The two clamping portions 128 converge toward each other, in other words the two clamping portions 128 extend toward the longitudinal plane P120 in a direction going from their first extremity to their second extremity and are configured to clamp onto the contact wire 110.

The busbar 120 is clamped on the contact wire 110 by moving away from each other, by elastic deformation, the two holding arms 124, then inserting the contact wire 110 between the two clamping tips 130, each slit 112 receiving a respective clamping tip 130, then letting the holding arms 124 return elastically to their original shape.

The two holding arms 124 delimit an inner volume V120 of the busbar 120.

Each clamping portion 128 also comprises a protective wall 132. For each clamping portion 128, the protective wall 132 is arranged between the first extremity 128A and the clamping tip 130 of said clamping portion 128. Each protective wall 132 extends within the inner volume V120 and is configured to prevent water condensing on the busbar 120 within the inner volume V120 to flow by gravity toward the clamping tips 130.

The two protective walls 132 comprise an upper wall 134 and a lower wall 136, the upper wall 134 being closer to the base 122 than the lower wall 136. The upper wall 134 and the lower wall 136 overlap each other along a direction orthogonal to the median plane P122, and delimit a volume V132, which forms a conduit configured to be filled with a protective paste, such as grease, when the contact wire 110 is held by the busbar 120. The protective paste is not shown.

The protective paste is a hydrophobic product with high viscosity and does not flow by itself. It is therefore possible to fill the volume V132 with the protective paste, therefore preventing water to enter the volume V132. The protective paste is preferably applied when the contact wire 110 is attached to the busbar 120.

The upper wall 134 and the lower wall 136 are arranged not to interfere with each other when the contact wire 110 is attached to or removed from the busbar 120. The upper wall 134 and the lower wall 136 are therefore separated by a gap G132, measured vertically. The gap G132 is however as small as possible, in order to limit the amount of protective paste entering the inner volume V120, when said protective paste is applied in the volume V132. Therefore the gap G132 is smaller than 5 mm, preferably smaller than 2 mm.

The upper wall 134 comprises a first outer face 134A, oriented toward the inner volume V120, while the lower wall 136 comprises a second outer face 136A, also oriented toward the inner volume V120. The first outer face 134A extends downwardly from the corresponding clamping portion 128, while the second outer face 136A extends upwardly from the corresponding clamping portion 128.

Therefore, condensing water within the inner volume V120 flows, by gravity, from the first outer face 134A to the second outer face 136A, without any risk of entering the volume V132. This situation could happen when the protective paste is not properly filling the volume V132.

In order to prevent condensing water to accumulate within the inner volume V120, draining holes 138 are arranged through the clamping portion 128 from which the lower wall 136 is extending, the draining holes 138 being arranged between the lower wall 136 and the first extremity 128A of said clamping portion 128. Only one draining hole 138 is visible in the section plane of figure 2. Several draining holes 138 are preferably arranged along the longitudinal axis A120, more preferably with a regular spacing between two consecutive draining holes 138.

Thanks to such configuration, there is no need for other draining holes to be arranged though the other clamping portion 128 on which the upper wall 134 is arranged. Especially, there is no need for other draining holes arranged between the upper wall 134A and the first extremity 128A of the clamping portion 128 on which the upper wall 134 is arranged, thus reducing the number of weak points of the busbar 120, and contributing to the durability and reliability of the ROCS 100. Without draining holes, the upper wall 134 is thicker, more rigid and more resistant to failure.

The clamping portion 128 from which the lower wall 136 extends comprises an internal face 140, that is oriented toward the inner volume V120, and an external face 142, that is oriented opposite from the internal face 140.

A first dripping edge 144 is arranged on the external face 142, the first dripping edge 144 being arranged between the draining holes 138 and the clamping tip 130 and extending downwardly. The dripping edge 144 prevents condensing water flowing out from the draining holes 138 to reach the contact wire 110, when the ROCS 100 is in use. In the illustrated example, the dripping edge 144 is arranged symmetrically from the lower wall 136 relatively to the clamping portion 128 on which the dripping edge 144 and the lower wall 136 are arranged.

Optionally, a second dripping edge 146 is also arranged on an external face 148 of the other clamping portion 128, that is to say on the external face 148 of the clamping portion 128 from which the upper wall 134 extends.

The respective features of the different embodiments and variants of the busbar considered in this description can be combined as long they fall under the scope of the following claims.

## Claims

1. Busbar (120) for holding a contact wire (110), the busbar (120) being arranged in a metal profile extending along a longitudinal axis (A120) and having a section comprising:
- a base (122), extending in a median plane (P122) and arranged along the longitudinal axis (A120),
- two holding arms (124), each comprising:
• a main portion (126) that extends from the base (122), so that the two main portions (126) are facing each other on either side of a longitudinal plane (P120) that is orthogonal to the median plane (P122) and parallel to the longitudinal axis (A120),
• a clamping portion (128), that comprises a first extremity (128A), linked to the main portion (126), and a second extremity (128B), opposite to the first extremity (128A) and forming a clamping tip (130) configured to cooperate with the contact wire (110),
wherein the two clamping portions (128) extend toward the longitudinal plane (P120) and are configured to clamp onto the contact wire (110),
wherein the two holding arms (124) delimit an inner volume (V120) of the busbar (120), wherein each clamping portion (128) also comprises a protective wall (132), which is arranged between its first extremity (128A) and the clamping tip (130), which extends within the inner volume (V120) and which is configured to prevent water condensing on the busbar (120) within the inner volume (V120) to flow by gravity to the clamping tips, **characterized in that**:
- the two protective walls (132) include an upper wall (134) and a lower wall (136), the upper wall (134) being closer to the base (122) than the lower wall (136),
- the upper wall (134) and the lower wall (136) overlap each other along a direction orthogonal to the median plane (P122), and delimit a volume (V132) configured to be filled with a paste, such as grease.

2. The busbar (120) according to claim 1, wherein the upper wall (134) and the lower wall (136) are separated by a gap (G132), which is smaller than 5 mm, preferably smaller than 2 mm.

3. The busbar (120) according to any one of claims 1 or 2, wherein the upper wall (134) comprises a first outer face (134A), oriented toward the inner volume (V120), while the lower wall (136) comprises a second outer face (136B), oriented toward the inner volume (V120), wherein the first outer face (134A) extend downwardly from the corresponding clamping portion (128), while the second outer face (136A) extends upwardly from the corresponding clamping portion (128).

4. The busbar (120) according to claim 3, wherein draining holes (138) are arranged through the clamping portion (128) from which the lower wall (136) extends, the draining holes (138) being arranged between the lower wall (136) and the first extremity (128A) of this clamping portion.

5. The busbar (120) according to claim 4, wherein a dripping edge (144) is arranged on an external face (142) of the clamping portion (128) from which the lower wall (136) extends, the dripping edge (144) being arranged between the draining holes (138) and the clamping tip (130) and extending downwardly.

6. The busbar (120) according to any one of claims 3 to 5, wherein no draining holes (138) are arranged though the clamping portion (128) from which the upper wall (134) extends.

7. A rigid overhead catenary system (100), comprising a contact wire (110) held by a busbar (120), wherein the busbar (120) is according to any one of the preceding claims.

8. A railtrack (2), comprising a track (20) and a rigid overhead catenary system (100) according to the preceding claim.

## Patentansprüche

1. Sammelschiene (120) zum Halten eines Fahrdrahts (110), wobei die Sammelschiene (120) in einem Metallprofil angeordnet ist, das sich entlang einer Längsachse (A120) erstreckt und einen Abschnitt aufweist, der Folgendes umfasst:
- eine Basis (122), die sich in einer mittleren Ebene (P122) erstreckt und entlang der Längsachse (A120) angeordnet ist,
- zwei Haltearme (124), die jeweils Folgendes umfassen:
• einen Hauptabschnitt (126), der sich von der Basis (122) erstreckt, sodass die zwei Hauptabschnitte (126) einander auf beiden Seiten einer Längsebene (P120) zugewandt sind, die orthogonal zu der mittleren Ebene (P122) und parallel zu der Längsachse (A120) ist,
• einen Klemmabschnitt (128), der ein erstes Ende (128A), das mit dem Hauptabschnitt (126) verbunden ist, und ein zweites Ende (128B) gegenüber dem ersten Ende (128A) und das eine Klemmspitze (130) bildet, umfasst, die konfiguriert sind, um mit dem Fahrdraht (110) zusammenzuwirken,
wobei sich die zwei Klemmabschnitte (128) in Richtung der Längsebene (P120) erstrecken und konfiguriert sind, um an den Fahrdraht (110) geklemmt zu werden,
wobei die zwei Haltearme (124) ein Innenvolumen (V120) der Sammelschiene (120) begrenzen,
wobei jeder Klemmabschnitt (128) auch eine Schutzwand (132) umfasst, die zwischen seinem ersten Ende (128A) und der Klemmspitze (130) angeordnet ist, die sich innerhalb des Innenvolumens (V120) erstreckt und die konfiguriert ist, um zu verhindern, dass Wasser, das an der Sammelschiene (120) innerhalb des Innenvolumens (V120) kondensiert, durch Schwerkraft zu den Klemmspitzen fließt, **dadurch gekennzeichnet, dass**:
- die zwei Schutzwände (132) eine obere Wand (134) und eine untere Wand (136) beinhalten, wobei die obere Wand (134) näher an der Basis (122) ist als die untere Wand (136),
- sich die obere Wand (134) und die untere Wand (136) einander entlang einer Richtung orthogonal zu der mittleren Ebene (P122) überlappen und ein Volumen (V132) begrenzen, das konfiguriert ist, um mit einer Paste, wie z. B. Fett, gefüllt zu sein.

2. Sammelschiene (120) nach Anspruch 1, wobei die obere Wand (134) und die untere Wand (136) durch einen Spalt (G132) getrennt sind, der kleiner ist als 5 mm, vorzugsweise kleiner als 2 mm.

3. Sammelschiene (120) nach einem der Ansprüche 1 oder 2, wobei die obere Wand (134) eine erste Außenfläche (134A) umfasst, die zu dem Innenvolumen (V120) ausgerichtet ist, während die untere Wand (136) eine zweite Außenfläche (136B) umfasst, die zu dem Innenvolumen (V120) ausgerichtet ist, wobei sich die erste Außenfläche (134A) von dem entsprechenden Klemmabschnitt (128) nach unten erstreckt, während sich die zweite Außenfläche (136A) von dem entsprechenden Klemmabschnitt (128) nach oben erstreckt.

4. Sammelschiene (120) nach Anspruch 3, wobei Entwässerungslöcher (138) durch den Klemmabschnitt (128) angeordnet sind, von dem sich die untere Wand (136) erstreckt, wobei die Entwässerungslöcher (138) zwischen der unteren Wand (136) und dem ersten Ende (128A) dieses Klemmabschnitts angeordnet sind.

5. Sammelschiene (120) nach Anspruch 4, wobei eine Abtropfkante (144) an einer Außenfläche (142) des Klemmabschnitts (128) angeordnet ist, von der sich die untere Wand (136) erstreckt, wobei die Abtropfkante (144) zwischen den Entwässerungslöchern (138) und der Klemmspitze (130) angeordnet ist und sich nach unten erstreckt.

6. Sammelschiene (120) nach einem der Ansprüche 3 bis 5, wobei durch den Klemmabschnitt (128), von dem sich die obere Wand (134) erstreckt, keine Entwässerungslöcher (138) angeordnet sind.

7. Starres Oberleitungssystem (100), umfassend einen Fahrdraht (110), der von einer Sammelschiene (120) gehalten wird, wobei die Sammelschiene (120) nach einem der vorherigen Ansprüche ist.

8. Bahngleis (2), umfassend ein Gleis (20) und ein starres Oberleitungssystem (100) nach dem vorherigen Anspruch.

## Revendications

1. Barre omnibus (120) pour maintenir un fil de contact (110), la barre omnibus (120) étant disposée dans un profilé métallique s'étendant le long d'un axe longitudinal (A120) et ayant une section comprenant :
- un pied (122), s'étendant dans un plan médian (P122) et disposé le long de l'axe longitudinal (A120),
- deux bras de maintien (124), chacun comprenant :
• une partie principale (126) qui s'étend à partir du pied (122), de sorte que les deux parties principales (126) se font face de part et d'autre d'un plan longitudinal (P120) qui est orthogonal au plan médian (P122) et parallèle à l'axe longitudinal (A120),
• une partie de serrage (128), qui comprend une première extrémité (128A), liée à la partie principale (126), et une seconde extrémité (128B), opposée à la première extrémité (128A) et formant une pointe de serrage (130) configurée pour coopérer avec le fil de contact (110),
dans laquelle les deux parties de serrage (128) s'étendent vers le plan longitudinal (P120) et sont configurées pour se fixer sur le fil de contact (110),
dans laquelle les deux bras de maintien (124) délimitent un volume intérieur (V120) de la barre omnibus (120),
dans laquelle chaque partie de serrage (128) comprend également une paroi de protection (132), qui est disposée entre sa première extrémité (128A) et la pointe de serrage (130), qui s'étend à l'intérieur du volume intérieur (V120) et qui est configurée pour empêcher l'eau se condensant sur la barre omnibus (120) à l'intérieur du volume intérieur (V120) de s'écouler par gravité vers les pointes de serrage, **caractérisée en ce que** :
- les deux parois de protection (132) comprennent une paroi supérieure (134) et une paroi inférieure (136), la paroi supérieure (134) étant plus proche du pied (122) que la paroi inférieure (136),
- la paroi supérieure (134) et la paroi inférieure (136) se chevauchent selon une direction orthogonale au plan médian (P122), et délimitent un volume (V132) configuré pour être rempli d'une pâte, telle que de la graisse.

2. Barre omnibus (120) conforme à la revendication 1, dans laquelle la paroi supérieure (134) et la paroi inférieure (136) sont séparées par un espace (G132) qui est inférieur à 5 mm, de préférence inférieur à 2 mm.

3. Barre omnibus (120) conforme à l'une quelconque des revendications 1 ou 2, dans laquelle la paroi supérieure (134) comprend une première face extérieure (134A), orientée vers le volume intérieur (V120), tandis que la paroi inférieure (136) comprend une seconde face extérieure (136B), orientée vers le volume intérieur (V120), dans laquelle la première face extérieure (134A) s'étend vers le bas à partir de la partie de serrage (128) correspondante, tandis que la seconde face extérieure (136A) s'étend vers le haut à partir de la partie de serrage (128) correspondante.

4. Barre omnibus (120) conforme à la revendication 3, dans laquelle des trous d'écoulement (138) sont disposés à travers la partie de serrage (128) à partir de laquelle la paroi inférieure (136) s'étend, les trous d'écoulement (138) étant disposés entre la paroi inférieure (136) et la première extrémité (128A) de cette partie de serrage.

5. Barre omnibus (120) conforme à la revendication 4, dans laquelle un bord d'égouttement (144) est disposé sur une face externe (142) de la partie de serrage (128) à partir de laquelle la paroi inférieure (136) s'étend, le bord d'égouttement (144) étant disposé entre les trous d'écoulement (138) et la partie de serrage (130) et s'étendant vers le bas.

6. Barre omnibus (120) conforme à l'une quelconque des revendications 3 à 5, dans laquelle aucun trou d'écoulement (138) n'est disposé à travers la partie de serrage (128) à partir de laquelle la paroi supérieure (134) s'étend.

7. Système de caténaire aérienne rigide (100), comprenant un fil de contact (110) maintenu par une barre omnibus (120), dans lequel la barre omnibus (120) est conforme à l'une quelconque des revendications précédentes.

8. Voie ferrée (2), comprenant une voie (20) et un système de caténaire aérienne rigide (100) conforme à la revendication précédente.
